# EUROPÄISCHE PATENTSCHRIFT

(11) **EP 1 643 929 B1**
(45) Veröffentlichungstag und Bekanntmachung des Hinweises auf die Patenterteilung: **23.05.2012**
(21) Anmeldenummer: 04737079.6
(22) Anmeldetag: 21.06.2004
(51) Int. Cl.: A61C 15/00

(54) **ELEKTRISCHES GERÄT ZUM VON REINIGEN VON ZAHNZWISCHENRÄUMEN SOWIE ZUM BEHANDELN VON ZÄHNEN ODER ZAHNFLEISCH**
ELECTRIC DEVICE FOR INTERDENTAL CLEANING AND FOR TREATING TEETH AND GINGIVAE
APPAREIL ELECTRIQUE DESTINE AU NETTOYAGE INTERDENTAIRE ET AU TRAITEMENT DES DENTS OU GENCIVES

(30) Priorität: 15.07.2003 US 487332 P
(43) Veröffentlichungstag der Anmeldung: 12.04.2006
(73) Patentinhaber: Braun GmbH, 61476 Kronberg (DE)
(72) Erfinder: TYNDALL, David, Vivian, Medway, MA 02053 (US); MANGAN, Edward, J., Southboro, MA 01772 (US); RICH, Christopher, Cambridge, MA 02138 (US); JONES, Gordon, Allston, MA 02134 (US); MASTERMAN, Thomas, Craig, Brookline, MA 02446 (US); KLAWUHN, Manfred, 60322 Frankfurt am Main (DE)
(86) Internationale Anmeldenummer: PCT/EP2004/006692
(87) Internationale Veröffentlichungsnummer: WO 2005/007013

(56) Entgegenhaltungen:
- EP-A- 0 704 180
- WO-A-03/059185
- US-A- 3 967 617

## Beschreibung

Die vorliegende Erfindung betrifft ein elektrisches Gerät zum Reinigen von Zahnzwischenräumen sowie zum Behandeln von Zähnen oder Zahnfleisch gemäß dem Oberbegriff des Patentanspruchs 1.

Ein elektrisch betriebenes Gerät zum Behandeln von Zähnen oder Zahnfleisch ist bereits aus der US 5,839,895 bekannt. Das Gerät weist einen Vibrator und einen Schaft auf, wobei das Ende des Schafts mit dem Vibrator verbunden ist. Die Vibrationsbewegung wird dabei über den Schaft zu einer Spitze übertragen, die am freien Ende des Schaftes angebracht ist. Diese Vorrichtung wird zur Vibrationsmassage verwendet, um das Mundgewebe besser zu behandeln. Ferner ist auch die Applikation von Medikamenten für das Mundgewebe über die entsprechende Vorrichtung vorgesehen. Außerdem ist hier die Verwendung der Vorrichtung zum Füllen von vorbereiteten Zahnlöchern, Zementierung von Inlays oder Onlays und die Behandlung anderer Krankheitsbilder beispielhaft beschrieben. Die US 5,839,895 beschreibt eine vor allem in Zahnarztpraxen eingesetzte Vorrichtung, nicht jedoch die Verwendung einer Reinigungsvorrichtung für den persönlichen Gebrauch.

Die US 4,880,382 offenbart ein integriertes Mundhygienesystem, welches eine elektrische Zahnbürste aufweist, wobei die Bürste durch andere Elemente, beispielsweise durch ein Massageelement, einen Zahnseidenhalter, eine Interdentalbürste, etc. ausgetauscht werden kann. Es wird hier eine verhältnismäßig große und ergonomisch nicht besonders für den Interdentalbereich geeignete, ziemlich unhandlich erscheinende Vorrichtung beschrieben.

Die US 3,967,617 offenbart eine mechanische Zahnfleischmassagevorrichtung, bei der das Massageelement während des Betriebs eine im wesentlichen elliptische Bahn beschreibt, wobei die Ebene dieser Bahn im wesentlichen rechtwinklig zu der Längsachse der Vorrichtung verläuft. Die Vorrichtung wird über einen Elektromotor betrieben, der einen Exzenter antreibt. Ein Massagewerkzeug wird hierdurch in Vibrationen versetzt. Das Massagewerkzeug wird dabei an einem koaxial zu der Motorachse liegenden Kupplungsabschnitt angebracht und kann in einem Winkel von 45° abgewinkelt sein. Auch diese Vorrichtung ist sperrig und unhandlich.

Die US 4,458,702 offenbart einen elektrischen Dental Flosser, das heißt, eine elektrische Vorrichtung zum Reinigen des Interdentalraums mittels Zahnseide. Dabei wird Zahnseide zwischen zwei festen Halterarmen der Vorrichtung verbunden, wobei die Halterarme gemeinsam über einen Schwingmotor angetrieben werden, so daß sie eine Auf- und Abbewegung vollziehen. Neben den hygienischen Problemen, die sich durch die feste Verbindung der Halterarme mit der Vorrichtung ergeben - ein Austausch ist hier nicht vorgesehen- , entstehen hier auch Verschleißprobleme, da der Exzenter in einer Lagerhülse für die entsprechende Auf- und Abbewegung sorgt.

Schließlich offenbart die DE 102 13 629 A1 eine Vorrichtung zum Reinigen der Zahnzwischenräume mit einem wenigstens teilweise zwischen die Zähne einführbaren länglichen Reinigungselement. Das längliche Reinigungselement weist dabei ein als Einzelborste bezeichnetes Vorderteil, ein Zwischenteil und eine Befestigungsbasis zur Befestigung in einer eine oszillierende Bewegung durchführenden elektrischen Interdentalreinigungsvorrichtung auf. Diese Vorrichtung basiert auf einer elektrischen Zahnbürste mit den oben beschriebenen Nachteilen.

Die EP-B-704 180 zeigt die Merkmale im Oberbegriff von Anspruch 1.

Der vorliegenden Erfindung liegt das technische Problem zugrunde, ein verbessertes elektrisches Gerät zum Reinigen von Zahnzwischenräumen sowie zum Behandeln von Zähnen oder Zahnfleisch zur Verfügung zu stellen, welches die oben genannten Nachteile des Standes der Technik vermeidet. Ferner soll eine kompakte, besonders handliche und einfach zu handhabende Vorrichtung vorgestellt werden, die bei besonders ergonomischen Gesichtspunkten die Schwingungen besonders intensiv und energiesparend auf das den Mundraum behandelndes Werkzeug überträgt.

Diese Aufgabe wird durch die Merkmale des Patentanspruchs 1 gelöst. Vorteilhafte Ausgestaltungen und Weiterbildungen der Erfindung werden in den Unteransprüchen beschrieben.

Das elektrische Gerät gemäß der vorliegenden Erfindung weist ein Gehäuse, einen Elektromotor mit einer Exzentermasse und eine Werkzeugaufnahme auf. Im Betrieb versetzt der Motor dabei die Exzentermasse in eine Drehbewegung wodurch eine Schwingung erzeugt wird, die direkt über die Werkzeugaufnahme auf ein den Mundraum behandelndes Werkzeug übertragen wird. Insbesondere bei batteriebetriebenen Geräten, bei denen nur begrenzt elektrische Energie zur Verfügung steht, ist der Gegenstand der Erfindung besonders gut einsetzbar, weil die Schwingungen direkt auf die Werkzeugaufnahme und nicht über das ganze Gehäuse übertragen werden. Diese direkte Einleitung der Schwingungen auf ein den Mundraum behandelndes Werkzeug läßt besonders klein bauende Elektromotoren zu, die dann auch verhältnismäßig wenig Energie benötigen. Auf diese Weise können bei sehr langen Betriebszeiten dennoch verhältnismäßig kleine Batterien oder Akkus eingesetzt werden. Auch die aufgrund der Erfindung eingesetzten Elektromotoren haben keinen wesentlich größeren Durchmesser als etwa 6 mm bis 8 mm und eine Länge von unter 20 mm. Dadurch kann das elektrische Gerät besonders klein bauen und läßt sich in einer Handtasche oder auch in einer Hosentasche problemlos mitführen, so daß nach jeder Speiseaufnahme das Gerät zur Reinigung der Zahnzwischenräume oder zur Massage von Zahnfleisch zur Verfügung steht.

Eine besonders einfache Befestigung des Elektromotors läßt sich durch die Merkmale des Patentanspruchs 2 erreichen. Dabei bildet die Werkzeugaufnahme einen Rohrabschnitt, in dessen Innenwand der Elektromotor befestigt ist. Die Gehäusewand des Rohrabschnitts kann dabei verhältnismäßig dünn ausgebildet werden und dennoch erhält der Elektromotor einen festen Sitz in der Innenwand des Rohrabschnitts. Dies insbesondere deshalb, damit möglichst wenig elektrische Energie bei dennoch größtmöglicher hochfrequenter Schwingungen erreicht wird.

Durch die Merkmale des Patentanspruchs 3 wird gewährleistet, daß die Exzentermasse besonders nah am Kupplungsbereich eines auf die Werkzeugaufnahme aufgesetzten Werkzeuges ausgebildet ist, um die von der Exzentermasse ausgehenden Schwingungen nahezu verlustfrei auf das Werkzeug übertragen zu können.

Besonders gut werden die Schwingungen auf ein Werkzeug übertragen, weil die Exzentermasse in demjenigen Bereich an der Werkzeugaufnahme angeordnet ist, der vom Kupplungsbereich der Werkzeugaufnahme überdeckt.

Durch die Merkmale des Patentanspruchs 5 wird der den Elektromotor und die Exzentermasse aufnehmende Raum vor Eindringen von Wasser und Schmutz von außen geschützt, um Beschädigungen am Elektromotor zu vermeiden. Dadurch, daß der den Kupplungsabschnitt B aufnehmende Raum und der den Elektromotor mit der Exzentermasse beherbergende Raum konzentrisch verlaufen und somit auf einer Achse liegen, läßt sich die Werkzeugaufnahme besonders einfach herstellen, insbesondere auch dann noch, wenn der Kupplungsabschnitt A ebenfalls konzentrisch zu diesen Räumen verläuft.

Eine weitere Wirkungsgradverbesserung und somit elektrische Energieeinsparung am Gerät wird nach den Merkmalen des Patentanspruchs 6 Dadurch erreicht, daß die Werkzeugauf-nahme und die Werkzeuge aus Kunststoff bestehen. In diesem Fall werden die Schwingungen besonders kräftig von der mit niedriger Masse ausgebildeten Werkzeugaufnahme auf das ebenfalls leichte Werkzeug übertragen, um so auch dann, wenn das Werkzeug, beispielsweise ein Interdentalreinigungswerkzeug, in einen Zahnzwischenraum geführt wird und dort leicht verklemmt, das Interdentalwerkzeug immer noch schnell genug freikommt, um weiterhin Speisereste aus den Zahnzwischenräumen zu lösen und nach außen zu transportieren.

Die einfachste und sicherste Befestigung des Elektromotors in der Werkzeugaufnahme wird durch die Merkmale des Patentanspruchs 7 erreicht, in dem der Elektromotor an der Innenwand der Werkzeugaufnahme eingepreßt wird. Das Gehäuse des Elektromotors kann aber auch ein Gewinde aufweisen, das mit einem an der Innenwand ausgebildeten Gewinde korrespondiert, wobei dann der Elektromotor soweit in die Innenwand eingeschraubt wird, bis er dort an einer Stufe anschlägt und bei weiterem Drehen gegen die Stufe so fest angeschraubt wird, daß der Gewindeeingriff eine Verdrehsicherung darstellt. Es ist aber auch denkbar, das Gewinde mit einem Gewindekleber zu versehen, der dann nach Einschrauben des Elektromotors diesen verdrehfest in der Werkzeugaufnahme hält. Eine weitere Alternative wären auch Rastelemente, die nach Einsetzen des Elektromotors in eine Paßbohrung diesen auf Anlage an einer in der Innenwand ausgebildeten Stufe halten.

Die Merkmale des Patentanspruchs 8 ermöglichen eine besonders einfache Montage und Aufnahme der Werkzeugaufnahme in einer Tragstruktur, die auch alle anderen elektrischen Komponenten, wie Schalter, Leitungen, Schaltkreis, Kontaktelement, Batterien oder Akkus trägt. Somit ist eine derartig vormontierte Einheit nur noch in einem Gehäuse einsetzbar, das die komplette Tragstruktur dichtend umgibt, damit die elektrischen Teile nicht beschädigt werden können, sei es durch Schmutz oder Feuchtigkeit.

Die Merkmale des Patentanspruchs 9 ermöglichen eine besonders einfache Befestigung eines die Zähne bzw. den Mundraum behandelnden Werkzeugs, wie Zahnseidehalter, Zahnstocher, Schleif- oder sonstige -einrichtungen. Dabei umschließt die am Werkzeug ausgebildete Kupplungsmanschette die Außenfläche der Werkzeugaufnahme derart bündig, daß alle von der Werkzeugaufnahme abgegebenen Schwingungen direkt und verlustfrei auf das Werkzeug übergehen.

Eine weitere vorteilhafte Ausführungsform alternativ oder zusätzlich zu der vorgenannten Ausführungsform weisen die Merkmale des Patentanspruchs 10 auf. Hier können zusätzlich beispielsweise Kupptungsbereiche mit polygonem Querschnitt aufgenommen werden. Derartige Kupplungsquerschnitte, beispielsweise ein Rechteckquerschnitt, sind insbesondere für flache Aufsätze, wie beispielsweise Zahnstocher, geeignet. Diese können nur bei einem Rechteckquerschnitt in zwei Richtungen eingesetzt werden. Bei einem quadratischen Querschnitt sind vier Richtungen möglich, bei einem runden Querschnitt sind alle Richtungen möglich, wenn nicht zusätzlich Richtungselemente an der Werkzeugaufnahme und an dem Werkzeug vorgesehen sind.

Die Merkmale des Patentanspruchs 11 ermöglichen an einem einzigen elektrischen Gerät mehrere Kupplungsabschnitte, so daß mit diesem Gerät verschiedene Bearbeitungsvorgänge mit verschiedenen Werkzeugen durchgeführt werden können. Hierdurch wird das Gerät universell einsetzbar und stellt einem Benutzer frei, welche Werkzeuge er mit diesem Gerät benutzen möchte.

Weitere Ausgestaltungen und Vorteile der Erfindung werden durch die Beschreibung der nachfolgenden Ausführungsbeispiele unter Bezugnahme auf die beigefügten Zeichnungen erläutert. Darin zeigen:
- Fig. 1: eine schematische vergrößerte Ansicht einer vorteilhaften Ausführungsform des elektrischen Geräts nach der Erfindung, wobei zur besseren Montage-und Demontagebeschreibung die Werkzeugaufnahme, die Tragstruktur und die Hutze teilweise aus dem Gehäuseteil herausgezogen sind;
- Fig. 2: eine vergrößerte perspektivische Ansicht der erfindungsgemäßen Tragstruktur mit Werkzeugaufnahme und elektrischen Anbauteilen, allerdings ohne eingesetzte Batterie;
- Fig. 3: einen Längsschnitt durch das nunmehr zusammengesetzte elektrische Gerät nach Fig. 1;
- Fig. 4: eine perspektivische Detailansicht auf die Werkzeugaufnahme, die an dem oberen Abschnitt der Tragstruktur mittels Rastnasen befestigt ist;
- Fig. 5: einen Längsschnitt durch das elektrische Gerät nach Fig. 3, allerdings mit einem in die Werkzeugaufnahme eingesetzten Zahnstocher und
- Fig. 6: einen Längsschnitt durch das elektrische Gerät nach Fig. 3, allerdings mit einem auf die Werkzeugaufnahme aufgesetzten Zahnseidenhalter.

Im Folgenden werden für gleiche oder ähnliche Bauteile gleiche Bezugszeichen gewählt, um Wiederholungen zu vermeiden. Dabei sind die Darstellungen rein erklärender Natur und nicht maßstäblich.

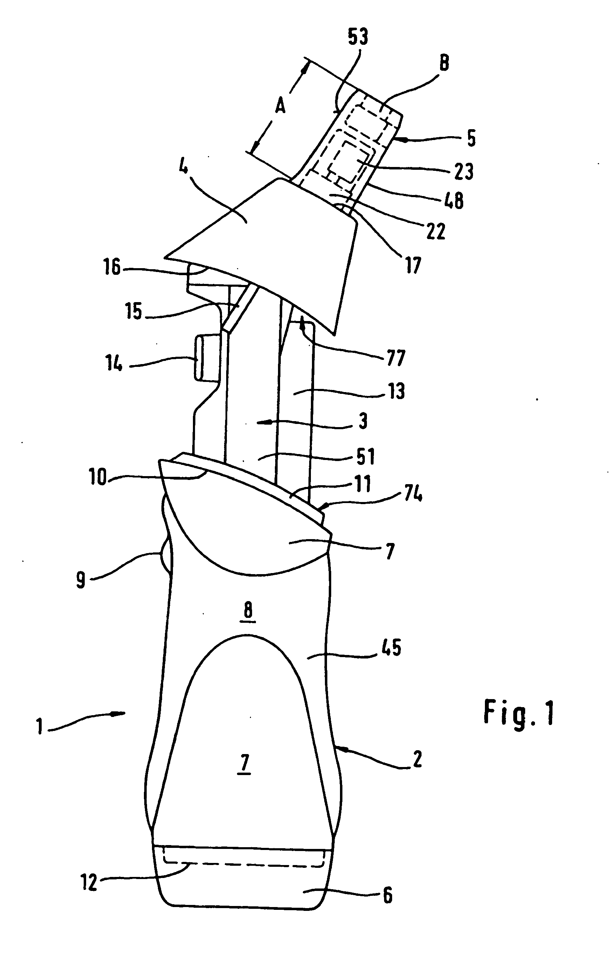

Das elektrische Gerät 1 weist ein rohrförmiges Gehäuseteil 45 aus thermoplastischem Kunststoff auf. dessen Längsachse 49 bei aufgestelltem Gerät 1 im wesentlichen senkrecht zur Horizontalen verläuft, wie dies die Figuren 1, 3, 5 und 6 zeigen. Das Gehäuseteil 45 weist eine obere Öffnung 46 und eine untere Öffnung 60 auf. Die obere Öffnung 46 ist durch eine Hutze 4 und die untere Öffnung 60 durch einen Gehäuseboden 6 verschließbar. In dem Gehäuseteil 45 ist der untere Abschnitt 51 einer Tragstruktur 3 aufgenommen, die in der Darstellung gemäß Fig. 1 teilweise aus dem Gehäuseteil 45 herausgezogen ist. Der untere Abschnitt 51 verläuft in Längsrichtung des Gehäuseteils 45 und geht etwa am Ausgang des oberen Gehäuserandes 10 in einen gegenüber der Längsachse 49 abgewinkelten oberen Abschnitt 52 über. Am oberen Abschnitt 52 der Tragstruktur 3 ist eine Werkzeugaufnahme 5 befestigt, die teilweise von einer Hutze 4 als oberes Deckelteil verschlossen ist. Der Gehäuseboden 6 dient, der unter anderem als Standfläche für das elektrische Gerät 1.

Das elektrische Gerät 1 weist im vorliegende Ausführungsbeispiel aufgrund seines kompakten modularen Aufbaus lediglich eine Gesamthöhe von 7 cm bis 9 cm ohne Reinigungsaufsatz auf. Als Batterie 13 kommen hier AAA - Batterien zur Anwendung, die in einer Aufnahme 54 des unteren Abschnitts 51 der Tragstruktur 3 einsetzbar ist. Durch die kompakte Bauweise kann die Vorrichtung bequem auf Reisen, nach einem Geschäftsessen und selbst beim abendlichen Ausgehen verwendet werden und unterschiedet sich hierdurch von bekannten Vorrichtungen, die im wesentlichen auf elektrischen Zahnbürsten und die Benutzung im Badezimmer abstellen. Durch den Batteriebetrieb ist die erfindungsgemäße Vorrichtung netzunabhängig. Aufwendige Adapter zum Verwenden von Interdentalreinigungsaufsätzen auf Elektrozahnbürsten sind hier nicht erforderlich.

Das Gehäuseteil 45 ist im vorliegenden Ausführungsbeispiel als Spritzgußteil im Zweikomponenten-Spritzgußverfahren hergestellt. Dabei sind teilweise die Bereiche 7 aus Hartkunststoff, im vorliegenden Ausführungsbeispiel aus Polypropylen, und die Bereiche 8 aus Weichkunststoff, im vorliegenden Ausführungsbeispiel aus TPE, hergestellt. Hierdurch wird neben guter Stabilität und Schlagfestigkeit des Gehäuses 2 eine ergonomische Handhabung mit guten haptischen Eigenschaften erzielt. Die Bereiche 8 aus Weichkunststoff dienen dabei vor allem als Finger- und Daumenauflage für eine Benutzerhand. Außerdem dient der elastisch nachgiebige Betätigungsknopf 9 als Tastfläche für den dahinter liegenden Ein- und Ausschalter 14. Der Weichkunststoff kann auf den Hartkunststoff aufgespritzt oder in Öffnungen in Form einer Membran eingespritzt werden. Letzteres geschieht insbesondere am Betätigungsknopf 9, um den innen liegenden elektrischen Schalter 14 betätigen zu können.

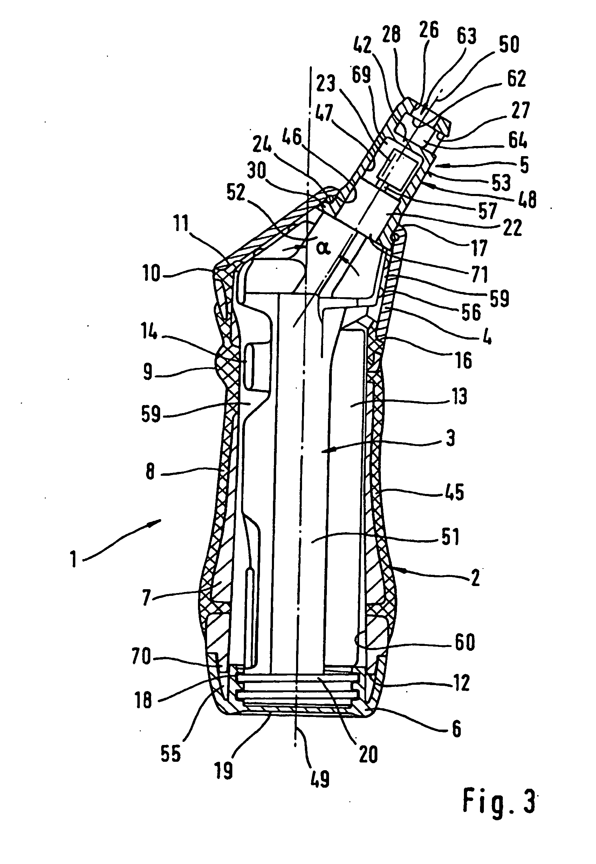

Das im wesentlichen als leicht tailliertes Zylinderrohr ausgebildeten Gehäuseteil 45 weist einen zur Horizontalen schräg verlaufenden, leicht geschwungenen oberen Gehäuserand 10 auf, der die obere Öffnung 46 einschließt und der von einer umlaufenden Dichtlippe 11 aus TPE gesäumt ist. Am unteren Ende weist das Gehäuseteil 2 einen horizontal verlaufenden, kreisförmigen unteren Gehäuserand 12 auf. Der Gehäuseboden 6 weist in Fig. 3 an seinem Innenumfang eine umlaufende Ringnut 55 auf, die beim Verschließen zur einfacheren Montage und Zentrierung in einen zum freien Ende des Gehäuseteils 2 sich zuspitzenden Rand 70 des Gehäuseteils 2 unverlierbar aber dennoch drehbar eingreift. Ferner weist der Gehäuseboden 6 ein Innengewinde 18 zum Eingriff in ein Außengewinde 20 der Tragstruktur 3 auf (siehe Fig. 3, 5, 6). An der Gehäusebodenunterseite 19 ist außerdem eine (nicht gezeigte) Entlüftungsbohrung angebracht, die zum Vermeiden von Überdruck im Gehäuseinneren 59 dient, der beispielsweise beim Ausgasen einer Batterie entsteht. Die Gehäusebodenunterseite 19 ist leicht linsenförmig nach innen gewölbt.

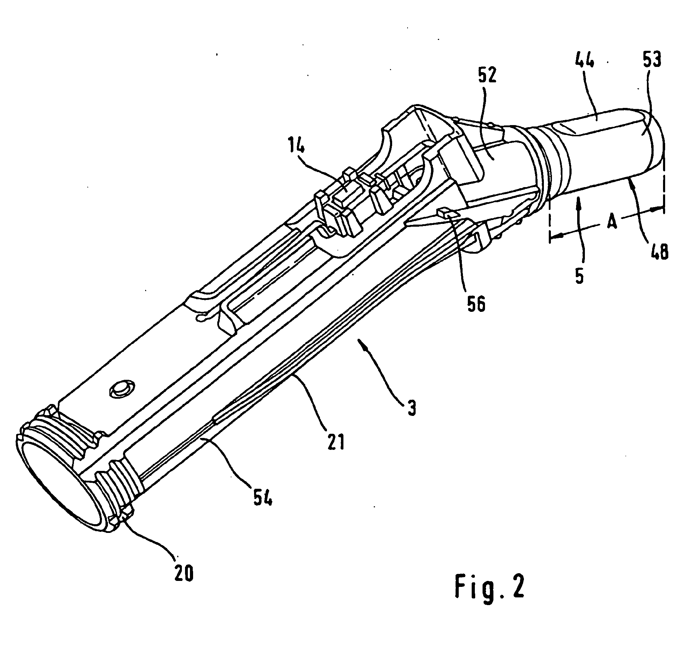

Die Tragstruktur 3 ist in der Darstellung in Fig. 1 und Fig. 3 mit der Batterie 13 zur Stromversorgung eines Elektromotors 22 versehen. Die perspektivische Einzelteildarstellung in Fig. 2 zeigt die Tragstruktur 3 ohne Batterie. An der länglichen als einstückiges Spritzgußteil aus thermoplastischem Kunststoff hergestellten Tragstruktur 3 ist auf der linken Längsseite nach Fig. 1, 3, 5, 6 der elektrische Ein-/Ausschalter 14 befestigt, während auf der dem Schalter 14 gegenüberliegenden Längsseite das Batteriefach 21 angeordnet ist. Ferner enthält die Tragstruktur 3 alle notwendigen Kabel und Kontaktpunkte, die aber in der Zeichnung nicht dargestellt sind.

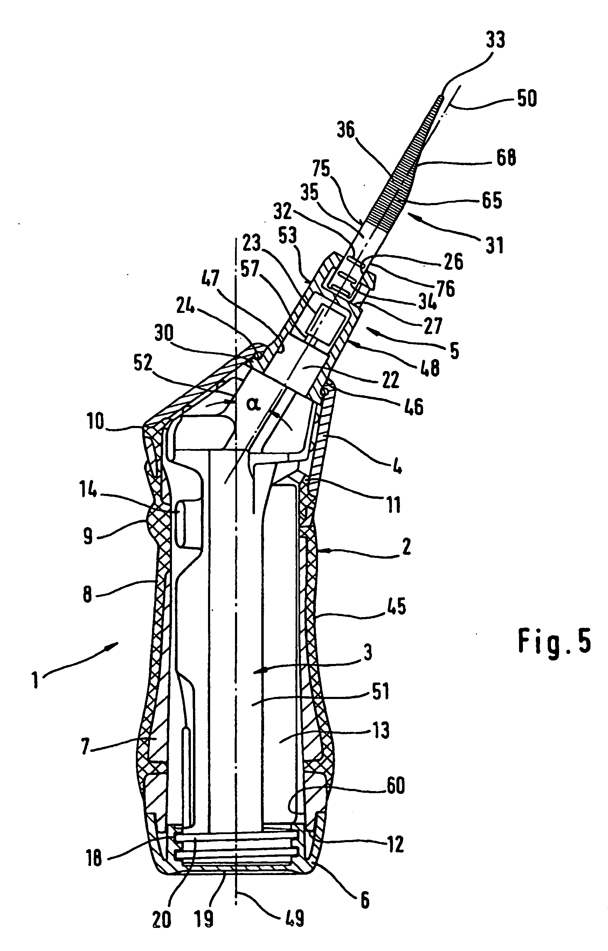

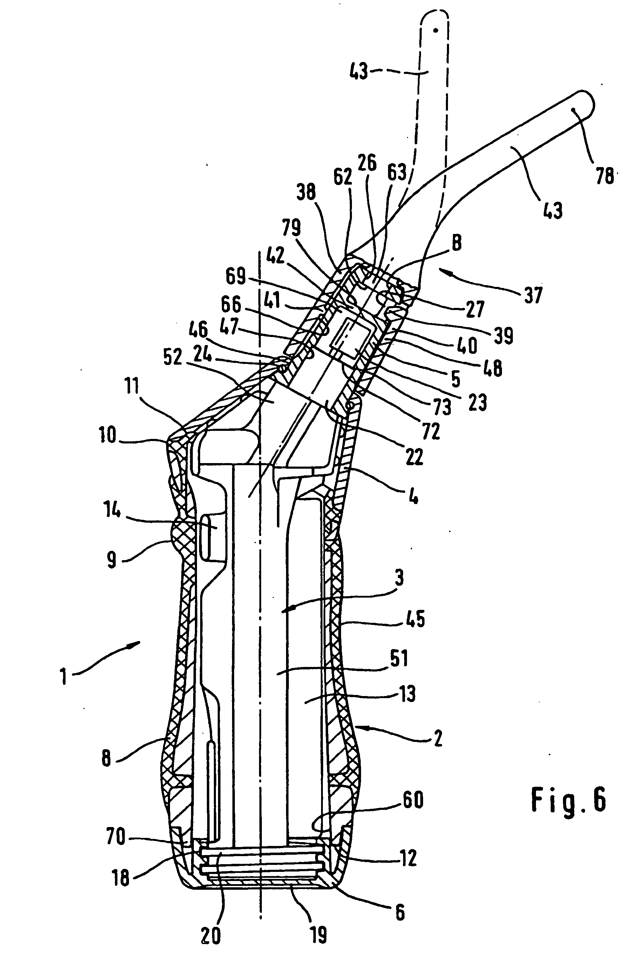

Im oberen Abschnitt 52 der Tragstruktur 3 sind nach Fig. 2 seitlich eine Rastaufnahmen 56 angeordnet, in die beim Aufsetzen der Hutze 4 zu dessen Befestigung an der Tragstruktur 3 der entsprechende Rasthaken 15 der Hutze 4 einhakt (siehe Fig. 1). Am abgewinkelten oberen Abschnitt 52 der Tragstruktur 3 ist die leicht kegelstumpfförmige Werkzeugaufnahme 5 verdrehsicher angebracht. Die Werkzeugaufnahme 5 bildet einen Rohrabschnitt 48, an dessen Innenwand 47 nach der Erfindung der Elektromotor 22 fest eingepreßt oder sonstwie starr befestigt ist. Aus dem Elektromotor 22 ragt eine Antriebswelle 57 hervor, an der eine Exzentermasse 23 befestigt ist, die ebenfalls von dem durch die Innenwand 47 gebildeten Raum 69 eingeschlossen ist. Der Elektromotor 22 weist dabei einen sehr kleinen Durchmesser, im vorliegenden Ausführungsbeispiel von etwa 6 mm, auf. Die Leistungsaufnahme des Motors beträgt nur etwa 0,1 Watt. Diese geringe Leistung wird durch die besonders vorteilhafte Platzierung der Exzentermasse 23 in der Werkzeugaufnahme 5 mit bewirkt, da die zum Betrieb der Werkzeuge 31, 37 (Fig. 5 und 6) benötigte Schwingung direkt an der Werkzeugaufnahme 5 erzeugt und direkt auf das Werkzeug übertragen wird.

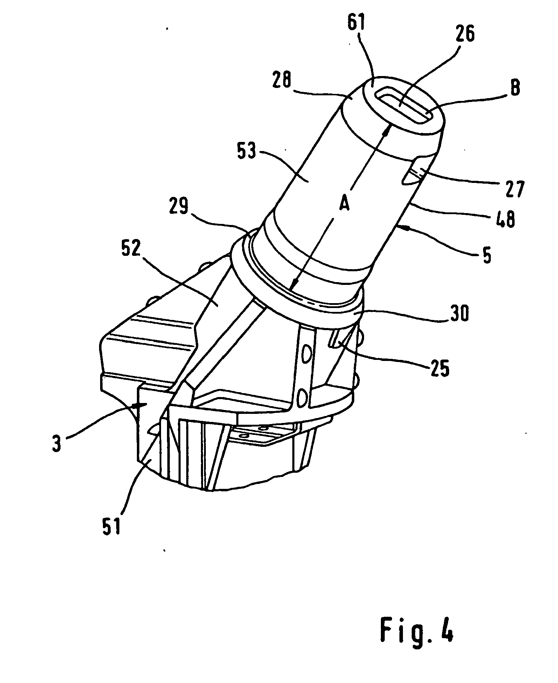

Aus der Darstellung in Fig. 3 und 5 ist deutlich der Winkel a zu erkennen, der zwischen der Längsachse 49 des Gehäuseteils und der Längsachse 50, die durch den Elektromotor 22, die Exzentermasse 23 und die Werkzeugaufnahme 5 verläuft, gebildet wird. Die Außenfläche 53 der Werkzeugaufnahme 5 durchdringt die obere Öffnung 46 der Hutze 4 soweit, daß der Rand der Öffnung 46 an einem sich erweiternden Ringbund 30 von innen her am Rand der Öffnung 46 anschlägt. Zwischen dem Ringbund 30 der Werkzeugaufnahme 5 und dem oberen Rand 17 der oberen Öffnung 46 ist eine O-Ring Dichtung 24 eingespannt, die das Gehäuseinnere 59 gegen Eindringen von Wasser abdichtet. Fig. 4 zeigt eine Detailansicht der Werkzeugaufnahme 5 in vergrößertem Maßstab, die an dem oberen Abschnitt 52 der Tragstruktur 3 befestigt ist. Dabei dienen mehrere am unteren Rand 30 am Umfang der Werkzeugaufnahme 5 senkrecht hervorstehende Nasen 25, die in entsprechende an der Tragstruktur 3 ausgebildete Nuten (nicht dargestellt) eingreifen, die neben der Funktion als Befestigungsmittel zusätzlich noch als Positionierhilfe und Verdrehsicherung dienen. Oberhalb des umlaufenden radial hervorstehenden Ringbundes 30 ist ein Dichtungssitz 29 vorgesehen, an dem sich die O-Ring Dichtung 24 abstützt, wenn die Hutze 4 an der Tragstruktur 3 befestigt wird.

Die im wesentlichen leicht konisch zum freien Ende sich verjüngende Außenfläche 53 der Werkzeugaufnahme 5 weist nach Fig. 4 an ihrem oberen Rand eine Fase 28 auf. Hierdurch können Werkzeuge 37, die beispielsweise eine die Werkzeugaufnahme 5 umfassende zylindrische oder konische Kupplungsmanschette 38 aufweisen, leichter zentriert und somit leichter aufgesetzt werden. Die Kupplungsmanschetten 38 der Werkzeuge 37 (Fig. 6) weisen dabei einen offenen rohrförmigen Querschnitt als Rohrabschnitt 48 auf, der auf die Außenfläche 53 passend aufgesetzt wird.

Schließlich ist an der Außenfläche 53 der Werkzeugaufnahme 5 eine Rastaufnahme 27 vorgesehen, die zum axialen und verdrehsicheren Festlegen von Werkzeugen 37, die mit der die Werkzeugaufnahme 5 spielfrei umschließenden Kupplungsmanschette 38 und einem daran angeordneten Rastelement 39 ausgestattet sind, wie aus Fig. 6 in Verbindung mit Fig. 3 zu entnehmen ist. Die Rastaufnahme 27 steht im vorliegenden Ausführungsbeispiel mit der Vierkantaufnahme 26 in direkter Verbindung und dient dadurch gleichzeitig als Ablaufkanal für Flüssigkeit, die sich in der Vierkantaufnahme 26 während des Betriebs sammeln könnte.

Fig. 6 zeigt eine vergrößerte schematische Darstellung des elektrischen Geräts 1 mit einem gabelförmigen Zahnseidenhalter 37. Der Zahnseidenhalter 37 weist dabei die im wesentlichen zylindrische Kupplungsmanschette 38 mit einer in der Zylinderwand angeordneten Rastzunge 40 mit Rastelement 39 und einem der Rastzunge 40 gegenüberliegenden Führungswulst 41 auf. Der an der Innenwand 66 der Kupplungsmanschette 38 hervorstehende Führungswulst 41 dient der verdrehsichern Montage auf der Werkzeugaufnahme 5. Hierfür ist als Gegenstück zum Führungswulst 41 eine in Längsachse 50 an der Außenfläche 53 verlaufende Abflachung 44 (siehe auch Fig. 2) an der Werkzeugaufnahme 5 vorgesehen.

Der Zahnseidenhalter 37 ist auf die im wesentlichen konische Werkzeugaufnahme 5 der elektrischen Interdentalreinigungsvorrichtung 1 aufgesetzt und das Rastelement 39 ist in der hierfür vorgesehenen Rastaufnahme 27 eingerastet. Dabei ist die Werkzeugaufnahme 5 von der Kupplungsmanschette 38 stramm und bündig umschlossen und der Zahnseidenhalter 37 ist absolut fest, aber dennoch von Hand lösbar, mit der Werkzeugaufnahme 5 verbunden.

Außerdem ist an der flachen Stirnseite 61 nach Fig. 4 eine Vierkantaufnahme 26 als Kupplungsabschnitt B zur Aufnahme eines Kupplungsbereichs 34 eines Werkzeugs 31 mit rechteckigem Querschnitt vorgesehen, wie beispielhaft aus Fig. 5 hervorgeht. Dabei soll erfindungsgemäß unter rechteckig auch ein entsprechender Querschnitt mit angefasten oder abgerundeten Kanten verstanden werden. Der Querschnitt der Vierkantaufnahme 26 nach Fig. 3 und 5 erweitert sich im Inneren an einer Stufe 62 vom oberen 63 zum unteren Raum 69, so daß die am Werkzeug 31 im Kupplungsbereich 34 ausgebildeten Querrasten 32 beim Einsetzen des Werkzeugs 39 im Bereich der Querschnittsverengung zusammengepreßt und im Bereich der Erweiterung 64 wieder mittels eines Rasteffektes entspannt werden. Auf diese Weise weiß eine Bedienungsperson, wann der Zahnstocher 31 richtig in der Vierkantaufnahme 26 eingesetzt ist. Der aus lebensmittelechtem thermoplastischem Kunststoff gespritzte Zahnstocher 31 nach Fig. 5 weist eine Zahnstocherspitze 33 auf.

Im Anschluß an den Kupplungsbereich 34 folgt an dem Zahnstocher 31 gemäß Fig. 5 ein Übergangsbereich 35, in dem sich der Querschnitt des Zahnstochers 31 von einem Rechteckquerschnitt auf einen Dreiecksquerschnitt verändert. Nach dem Übergangsbereich 35 folgt der Reinigungsbereich 36, der einen dreieckigen Querschnitt mit einer verhältnismäßig scharfen Kante 68 aufweist, wobei die Höhe des Zahnstochers 31 in Längsachse 50 von der Kante 68 her bis zur Zahnstocherspitze 33 hin von der Kante 68 her progressiv abnimmt, um ein leichteres Eindringen in die Zahnzwischenräume zu erreichen. Die Seitenflächen 65 des Reinigungsbereichs 36 sind quer zur Längsachse 50 geriffelt bzw. strukturiert ausgebildet, um die Reinigungswirkung zu verstärken.

Die Werkzeugaufnahme 5 wird nach den Figuren 3, 5, 6 von einem Rohrabschnitt 48 gebildet, der im vorliegenden Beispiel nach Fig. 3 im wesentlichen in zwei Abschnitte unterteilt, nämlich den oberen 63 und unteren Raum 69, die durch eine Zwischendecke 42 wasserdicht voneinander abgetrennt sind. Die Räume 63, 69 sind konzentrisch zueinander angeordnet. Im unteren Raum 69 ist im vorliegenden Ausführungsbeispiel an der Innenwand 47 die Exzentermasse 23 und der Elektromotor 22 befestigt, vorzugsweise durch Einpressen. Hierdurch wird beim Einschalten des elektrischen Geräts 1 die Werkzeugaufnahme 5 und damit auch das entsprechende Werkzeug 31, 37 in Vibration versetzt. Diese Schwingungen bewirken eine oszillierende Bewegung der zwischen den Gabelarmen 43 gespannten Zahnseide bzw. des Zahnstochers 31, was zum gewünschten Herausfördern von Lebensmittelresten u.ä. aus einem Zahnzwischenraum führt. Außerdem werden auf diese Weise die an der Zahnseide bzw. die an der Oberfläche im Reinigungsbereich 36 des Zahnstochers 31 aufgebrachten Geschmacks- und Pflegestoffe gleichmäßig über den Zahnzwischenraum verteilt.

Die Montage des erfindungsgemäßen Gerätes 1 weist folgende Schritte auf:
Es wird über die Außenfläche 53 auf die Werkzeugaufnahme 5 ein O-Ring 24 soweit geschoben, bis er am Dichtungssitz 29 des Ringbundes 30 der Werkzeugaufnahme 5 zur Anlage gelangt. In Figur 4 ist der O-Ring 24 allerdings noch nicht aufgeschoben.

Zum Befestigen der so vormontierten Werkzeugaufnahme 5 an der Tragstruktur 3 wird nunmehr die Hutze 4 mittels ihrer unteren 77 und ihrer oberen Öffnung 46 über die Werkzeugaufnahme derart gestülpt, daß der obere Rand 17 mit seiner Innenfläche den O-Ring 24 gegen den Dichtungssitz 29 des Ringbundes 30 preßt. Dabei ist zu bemerken, daß die den oberen Rand 17 eingrenzende obere Öffnung 46 in ihrem Durchmesser geringfügig größer ist als der Durchmesser der Außenfläche 53 und daß der Außendurchmesser des Ringbundes 30 größer ist als der Durchmesser der oberen Öffnung 46. Hierdurch wird gewährleistet, daß der obere Rand 17 der Hutze 4 über den O-Ring 24 am Ringbund 30 auf Anschlag gehalten wird. Der O-Ring 24 dichtet die Werkzeugaufnahme 5 gegenüber der Hutze 4 ab, damit an dieser Stelle kein Wasser und Schmutz in das Gehäuseinnere 59 gelangen kann.

Nun wird die Werkzeugaufnahme 5 ohne Hutze 4 auf den oberen Abschnitt 52 der Tragstruktur 3 derart aufgeschoben, daß die Werkzeugaufnahme 5 an einem an der Tragstruktur ausgebildeten Zentrierring (nicht zu erkennen) aufsitzt. Nun werden die elektrischen Leiterbahnen (nicht dargestellt), der elektrische Schalter 14 und die vom Elektromotor 22 abgehenden Kabel mit dem in der Aufnahme 54 ausgebildeten Kontaktfahnen einer Batterie 13 (Figur 3) verbunden. Wenn nun der Schalter 14 eingeschaltet wird, wird der Motor 22 mit elektrischer Energie durch die Batterie 13 (Figur 3) verbunden und somit in Drehung versetzt. Auf diese Weise kann die so vormontierte Tragstruktur 3 bereits in diesem Zustand, wenn eine Batterie 13 in die Batterieaufnahme 54 eingesetzt ist, auf seine Funktion getestet werden, da in diesem Zusammenbauzustand bereits alle entsprechenden elektrischen Teile mit Spannung versorgt werden können.

Nun wird die Hutze 4 über die Werkzeugaufnahme 4 so zum Tragkörper 3 gedrückt wird, daß die an der Hutze 4 ausgebildeten Rasthaken 15 in Eingriff mit den Rastaufnahmen 56 der Tragstruktur 3 gelangen (Figuren 1 und 2). In dieser Stellung zieht die Hutze 4 über den oberen Rand 17 die Werkzeugaufnahme 5 gegen die Tragstruktur 3 und hält sie dort mit Vorspannung auf Anschlag. Die Vorspannung wird dadurch erreicht, daß einerseits die Rasthaken 15 leicht elastisch ausgebildet sind und andererseits der O-Ring 24 nach Einrasten der Rasthaken 15 derart von der Hutze 4 vorgespannt ist, daß die Werkzeugaufnahme 5 mitsamt der Hutze 4 spielfrei und drehfest an der Tragstruktur anliegt. Die Tragstruktur 3 ragt mit ihrem unteren Abschnitt 51 aus der unteren Öffnung 77der Hutze 4 nach unten heraus. Läuft das Gerät 1 einwandfrei, so kann nach Figur 1 die fertig montierte Tragstruktur 3 in das Gehäuseteil 45 eingesetzt werden. Dabei wird das untere freie Ende des unteren Abschnitts 51 der Tragstruktur 3 zunächst über die obere Öffnung 74 des Gehäuseteils 45 eingeschoben. Dies geht allerdings nur, wenn die Tragstruktur 3 die richtige Lage zum Gehäuseteil 45 aufweist, was durch in der Zeichnung nicht dargestellte Führungsrippen ermöglicht wird, die nur dann, wenn die richtige Orientierung der Tragstruktur 3 zum Gehäuseteil 45 getroffen wurde, ein Einsetzen der Tragstruktur 3 in das Gehäuseteil 3 ermöglicht.

Nun wird nach den Figuren 3, 5, 6 die Tragstruktur soweit in das Gehäuseteil 45 eingeschoben, bis der untere Rand 16 der Hutze 4 kurz vor oder an dem oberen Gehäuserand 10 zur Anlage gelangt. Nun wird der Gehäuseboden 6 in die untere Öffnung 60 des Gehäuseteils 45 eingesetzt und solange gedreht, bis das Innengewinde 18 des Gehäusebodens 6 in das Außengewinde 20 der Tragstruktur 3 eingreift. Bei weiterem Drehen wird nun langsam die Tragstruktur 3 soweit in Richtung zum Gehäuseboden 6 - denn dieser stützt sich an der unteren Öffnung 60 des Gehäuseteils 45 ab - gezogen, daß der untere Rand 16 der Hutze 4 gegen den oberen Gehäuserand 10 des Gehäuseteils 45 gepreßt wird. In dieser Stellung ist das elektrische Gehäuse komplett montiert und ist auch gegen Wasser und Schmutz im Gehäuseinneren 59 resistent. An dieser Stelle sei noch bemerkt, daß der Gehäuseboden 6 auch verliersicher, aber drehbar an der unteren Öffnung 60 des Gehäuseteils 45 befestigt sein kann.

Die Montage von Werkzeugen 31, 37 verläuft wie folgt:
Das Gerät ist nunmehr betriebsbereit. Es kann nun gemäß Fig. 5 ein Zahnstocher 31 in den Kupplungsabschnitt B eingesetzt werden. Dabei wird der Kupplungsbereich 34 in die Vierkantaufnahme 26 soweit eingeschoben, bis sein freies Ende am Boden 79 (Figur 6) der Vierkantaufnahme 26 anschlägt und dabei gleichzeitig eine am Zahnstocher 31 ausgebildete Querraste 32 die Stufe 62 leicht hintergreift, so daß der Zahnstocher 31 in der Vierkantaufnahme 26 gegen Herausfallen und Kippen gesichert ist. An den Schmalseiten 75, 76 des Zahnstochers 31 sind ebenfalls von den Schmalseiten 75, 76 sich abhebende Querrasten (nicht dargestellt); die von den kürzeren Längsseiten der Vierkantaufnahme 26 derart zusammengepreßt werden, daß der Zahnstocher 31 von allen Seiten in der Vierkantaufnahme 26 einen sicheren Halt erhält. Durch das Zusammenpressen der Querraste 32 in der Vierkantaufnahme 26, das mittels einer in gewissen Grenzen plastischen Verformung erfolgt, erhält der Zahnstocher 31 auch im Betrieb einen absolut festen Sitz in der Vierkantaufnahme 26. Nur mit höherer Kraft kann der Zahnstocher 31 von Hand wieder aus der Vierkantaufnahme 26 herausgezogen werden.

Will man das Gerät 1 gemaß Figur 6 mit einem Zahnseidehalter 37 benutzen, so schiebt man die Kupplungsmanschette 38 über die Außenfläche 53 soweit auf, bis das Rastelement 39 in die Rastaufnahme 27 federnd einrastet. Bei Benutzung eines Zahnseidehalters 37 gemäß Fig. 6 kann dieser sowohl in der einen Richtung (durchgezogen dargestelt), wie in der anderen Richtung (gestrichelt dargestellt) eingesetzt werden, wenn an gegenüberliegenden Seiten der Kupplungsmanschette 38 federnde Rastzungen 40 mit Rastelementen 39 ausgebildet sind, die jeweils ein Rastelement 39 aufweisen. Diese Rastelemente 39 greifen dann in an der Werkzeugaufnahme 5 ausgebildete, ebenfalls gegenüberliegende Rastaufnahmen 27 und halten so den Zahnseidehalter 37 gegen Herausfallen fest an der Werkzeugaufnahme 5.

Bevorzugt ist allerdings der gestrichelt dargestellte Einbau des Zahnseidenhalters 37 nach Figur 6, da man in dieser Stellung am besten mit dem Gerät 1 sowohl im unteren wie im oberen Mundraum hantieren kann. Dies deshalb, weil das Gerät 1 und der Zahnseidenhalter 37 einen s-förmigen Verlauf bilden und somit der Zahnseidehalter besser beidseitig in den Mundraum einsetzbar ist. Ist also nur eine Einbaustellung des Zahseidehalters 37 am Gerät 1 gewünscht, um einer Bedienungsperson nur die beste Stellung anzubieten, dann sollte die Rastaufnahme 27 gerade um 180° versetzt an der Außenfläche 53 der Werkzeugaufnahme 5 angeordnet sein. Das Rastelement 39 und die Rastzunge 40 mussen dann ebenfalls um 180° versetzt an der Kupplungsmanschette 38 angeordnet sein.

Damit der Zahnseidehalter 37 absolut fest auf der Werkzeugaufnahme 7 geführt wird, sind die Außenfläche 53 der Aufnahme 5 und der Durchmesser der Innenwand 66 der Kupplungsmanschette 38 als zusammenwirkende Paßbohrungen ausgebildet. Da dies aber aus Herstellungsgründen oft schwierig zu handhaben ist, kann auch die Außenfläche 53 der Werkzeugaufnahme zum Gerät 1 hin sich leicht konisch erweitern, so daß der größte Durchmesser im Bereich des oberen Randes 17 an der Werkzeugaufnahme größer ist als der Durchmesser der Innenwand 66 der Kupplungsmanschette 38. Hierdurch wird erreicht, daß beim Aufschieben des Zahnseidehalters 37 auf die Außenfläche 53 der Werkzeugaufnahme 5 der Zahnseidehalter 37 mit der Außenfläche 53 einen Preßsitz bildet und somit der Zahnseidehalter 37 ebenfalls verdrehsicher und fest auf der Werkzeugaufnahme 5 befestigt ist. In dieser Stellung rastet dann auch gerade das Rastelement 39 in die Rastaufnahme 27 der Werkzeugaufnahme 5 schlüssig ein.

Die Arbeitsweise des Gerätes 1 ist folgende:
Das elektrische Gerät 1 wird eingeschaltet, indem der Betätigungsknopf 9 an der Außenseite des Gehäuseteils 45 zum elektrischen Schalter 14 hin bewegt und in dieser Stellung von Hand gehalten wird. Dabei verschiebt sich der als federnde Membran ausgebildete Betätigungsknopf 9 zum elektrischen Schalter 14 hin und schaltet diesen solange, wie der Betätigungsknopf 9 von Hand gedrückt wird, ein. Einen derartigen Schalter 14 nennt man einen Momentenschalter. Der Vorteil ist, daß erst dann, wenn das Werkzeug 31, 37 sich in der richtigen Zahnzwischenraum befindet, eingeschaltet wird und nur solange eingeschaltet bleibt, solange der Schalter 14 betätigt wird. Dies spart auch elektrische Energie.

Nun wird über die Batterie 13 Strom über die nicht dargestellten Leitungen zum Elektromotor 22 geführt und die mit der Antriebswelle 57 verbundene Exzentermasse 23 in Rotation verssetzt. Durch die sehr schnell (ca. 9000 Umdrehungen pro Minute) rotierende Exzentermasse 23 werden hochfrequente Schwingungen über die Antriebswelle 57 zum Elektromotor 22 und von dort über die Innenwand 47 zur Werkzeugaufnahme 5 übertragen, die ebenfalls zu hohen Schwingungen angeregt werden. Diese Schwingungen werden nun auf das fest mit der Werkzeugaufnahme 5 verbundene Werkzeug 31, 37 übertragen.

Führt man nun beispielsweise die Zahnstocherspitze 33 nach Figur 5 in einen Zahnzwischenraum einer Bedienungsperson (nicht dargestellt) ein, so löst sie aufgrund der hohen Schwingungen sowohl an der Zahnspüze 33 wie auch an den Seitenflächen 65 des Reinigungsbereiches 36 Speisereste und sonstige Ablagerungen in dem Zahnzwischenraum ab, wenn der Reinigungsbereich 36 mit Zahnteilen in Kontakt gelangt. Entsprechend verhält sich dies bei dem Zahnseidehalter 37 gemäß Fig. 6, allerdings führt man hier den zwischen zwei Gabelarmen 43 eingespannten Seidenfaden 78 (nur das eingespannte Ende ist von außen sichtbar) in einen Zahnzwischenraum, wo dieser aufgrund seiner hohen Schwingungen ebenfalls Material von den Zähnen abträgt und seitlich zu den Gabelarmen 43 abtransportiert. Sind die Werkzeuge 31, 37 noch mit einem speziellen mit Aromen, wie Pfefferminz, versehenen Wachs beschichtet, so erfolgt eine bessere Bearbeitung bei besserem Geruch und Geschmack.

Ein Batteriewechsel ist wie folgt:
Zum Batteriewechsel des elektrischen Gerätes 1 wird lediglich der Gehäuseboden 6 soweit gelöst, bis das Innengewinde 18 außer Eingriff von dem Außengewinde 20 gelangt. Ist der Gehäuseboden 6 drehbar aber ortsfest mit dem Gehäuseteil 45 verbunden, so wird beim Lösen der Gewindeeinrichtung 18, 20 die Tragstruktur 3 nach oben transportiert, wobei sich die Hutze 4 vom Gehäuseteil 45 löst. Nunmehr kann die komplette Tragstruktur 3 mit der Hutze 4 aus dem Gehäuseteil 45 herausgenommen werden und die alte Batterie 13 gegen eine neue ersetzt werden. Die Montage erfolgt in entgegengesetzter Richtung, wie dies bereits zuvor bei der Montage des elektrischen Gerätes 1 beschrieben wurde.

## Patentansprüche

1. Elektrisches Gerät (1) zum Reinigen von Zahnzwischenräumen sowie zum Behandeln von Zähnen und Zahnfleisch, mit einem Gehäuse (2), in dem eine von einem Elektromotor (22) angetriebene Exzentermasse (23) ausgebildet ist, deren Schwingungen auf eine Werkzeugaufnahme (5) übertragbar sind, an dessen Kupplungsbereich (A, B) den Mundraum behandelnde Werkzeuge, wie Interdentalreiniger (31), Zahnseidehalter (37), Reib- und Polierscheiben, etc., ankuppelbar sind, wobei an der Werkzeugaufnahme (5) der Elektromotor (22) mit seiner frei drehenden Exzentermasse (23) befestigt ist
**dadurch gekennzeichnet,**
**daß** die Exzentermasse (23) in demjenigen Bereich an der Werkzeugaufnahme (5) (48) angeordnet ist, der den Kupplungsbereich (A) der Werkzeugaufnahme (5) überdeckt und daß die Werkzeugaufnahme (5) aus einem Rohrabschnitt (48) besteht, daß die Werkzeugaufnahme (5) mit dem Elektromotor (22) an einer Tragstruktur (3) befestigt ist, an der die elektrischen Komponenten, wie Schalter (14), Leitungen, Schaltkreis, Kontaktelemente, Batterie(n) (13) oder Akku(s) aufgenommen sind und eine derartig vormontierbare Einheit in das Gehäuse (2) einsetzbar ist und daß der Kupplungsabschnitt (A) von der Außenfläche (53) der Werkzeugaufnahme (5) gebildet wird, daß die Außenfläche (53) als sich zum Gerät (1) hin konisch erweiternder Kegelstumpf ausgebildet ist.

2. Elektrisches Gerät (1) nach Patentanspruch 1,
**dadurch gekennzeichnet,**
**daß** sich die Exzentermasse (23) vom Elektromotor (22) in Richtung des freien Endes der Werkzeugaufnahme (5) erstreckt.

3. Elektrisches Gerät (1) nach Patentanspruch 1,
**dadurch gekennzeichnet,**
**daß** der an der Werkzeugaufnahme (5) angeordnete Kupplungsbereich (B) in axialer Richtung vor der Exzentermasse (23)angeordnet ist.

4. Elektrisches Gerät (1) nach Patentanspruch 3,
**dadurch gekennzeichnet,**
**daß** der den Kupplungsabschnitt (B) bildende Raum (63) durch eine Zwischendecke (42) von dem die Exzentermasse (23) aufnehmenden unteren Raum (69) getrennt ist.

5. Elektrisches Gerät (1) nach Patentanspruch 1,
**dadurch gekennzeichnet,**
**daß** die Werkzeugaufnahme (5) und die Werkzeuge (32, 37) aus Kunststoff bestehen.

6. Elektrisches Gerät (1) nach Patentanspruch 1,
**dadurch gekennzeichnet,**
**daß** sich die zum Gerät (1) hin als konisch erweiternder Kegelstumpf ausgebildete Außenfläche (53) zur Aufnahme einer entsprechenden, die Werkzeugaufnahme (5) umschließenden Kupplungsmanschette (38) dient, die ihrerseits Teil des Werkzeuges (37) ist.

7. Elektrisches Gerät (1) nach Patentanspruch 3,
**dadurch gekennzeichnet,**
**daß** die Werkzeugaufnahme (5) vorzugsweise an ihrer flachen Stirnseite den Kupplungsabschnitt (B) in Form eines Innen-Mehrkantprofils, vorzugsweise eines Innen-Vierkantprofils (26), aufweist, in das ein Werkzeug (31) mit seinem Kupplungsbereich (34) fest einsetzbar ist.

8. Elektrisches Gerät (1) nach den Patentansprüchen 1 und 3,
**dadurch gekennzeichnet,**
**daß** an der Werkzeugaufnahme (5) sowohl der Kupplungsabschnitt (A) wie der Kupplungsabschnitt (B) ausgebildet sind.

## Claims

1. An electrical apparatus (1) for cleaning interproximal spaces and for the treatment of teeth and gums, comprising a casing (2), in which is constructed an eccentric mass (23) driven by an electric motor (22), the vibrations of which are transferable to a tool carrier (5), to the coupling region (Fa, B) of which tools for treating the oral cavity such as interdental cleaners (31), floss holders (37), friction and polishing disks, etc., can be coupled, wherein the electric motor (22) with its freely rotating eccentric mass (23) is affixed to the tool carrier (5)
**characterised in**
**that** the eccentric mass (23) is arranged in that region on the tool carrier (5) (48) which is covered by the coupling region (A) of the tool carrier (5).that the tool carrier (5) consists of a tubular section (48), that the tool carrier (5) with the electric motor (22) is affixed to a supporting structure (3) on which are accommodated electrical components such as a switch (14), leads, a circuit, contact elements, battery/batteries (7.3) or rechargeable battery/batteries and such a pre-assembled unit is insertable in the casing (2) that the coupling section (A) is formed by the outer surface (53) of the tool carrier (5), that the outer surface (53) is constructed as a truncated cone which expands conically towards the apparatus (1).

2. The electrical apparatus (1) according to claim 1,
**characterised in**
**that** the eccentric mass (23) extends from the electric motor (22) in the direction of the free end of the tool carrier (5).

3. The electrical apparatus (1) according to claim 1,
**characterised in**
**that** the coupling region (B) arranged on the tool carrier (5) is arranged in the axial direction before the eccentric mass (23).

4. The electrical apparatus (1) according claim 3,
**characterised in**
**that** the space (63) forming the coupling section (B) is separated by an intermediate cover (42) from the lower space (69) accommodating the eccentric mass (23).

5. The electrical apparatus (1) according to claim 1,
**characterised in**
**that** the tool carrier (5) and the tools (32, 37) consist of plastic.

6. The electrical apparatus (1) according to claim 1,
**characterised in**
**that** the outer surface (53) which is constructed as a truncated cone and which expands conically towards the apparatus (1) serves to accommodate a corresponding coupling sleeve (38) which surrounds the tool carrier (5), which for its part is part of a tool (37).

7. The electrical apparatus (1) according to claim 3,
**characterised in**
**that** the tool carrier (5) preferably has the coupling section (B) on its flat front side, in the form of an inner polygonal profile, preferably an inner square profile (26) into which a tool (31) with its coupling region (34) can be fixedly inserted.

8. The electrical apparatus (1) according to claims 1 and 3,
**characterised in**
**that** both the coupling section (A) and the coupling section (B) are constructed on the tool carrier (5).

## Revendications

1. Appareil électrique (1) destiné au nettoyage interdentaire et au traitement des dents et gencives, comprenant un boîtier (2) dans lequel est reçue une masse excentrique (23) qui est entraînée par un moteur électrique (22) et dont les vibrations peuvent être transmises à un porte-instrument (5), des instruments de traitement de la cavité buccale, tels que des dispositifs de nettoyage interdentaire (31), des supports de fil dentaire (37), des disques d'abrasion et de polissage, etc., pouvant être accouplés à la région d'accouplement (A, B) du porte-instrument (5), sachant que le moteur électrique (22) est fixé au porte-instrument (5) avec sa masse excentrique (23) tournant librement,
**caractérisé en ce que**
la masse excentrique (23) est disposée sur le porte-instrument (5) dans la région (48) qui recouvre la région d'accouplement (A) du porte-instrument (5) et **en ce que** le porte-instrument (5) est constitué d'une partie tubulaire (48), **en ce que** le porte-instrument (5) muni du moteur électrique (22) est fixé à une structure porteuse (3) qui reçoit les composants électriques tels qu'un commutateur (14), des lignes électriques, un circuit électrique, des éléments de contact, une ou plusieurs batteries (13) ou piles, et une telle unité de préassemblable peut être insérée dans le boîtier (2), et **en ce que** la partie d'accouplement (A) est formée par la surface extérieure (53) du porte-instrument (5), la surface extérieure (53) étant réalisée sous la forme d'un tronc de cône s'élargissant coniquement en direction de l'appareil (1).

2. Appareil électrique (1) selon la revendication 1,
**caractérisé en ce que**
la masse excentrique (23) s'étend depuis le moteur électrique (22) en direction de l'extrémité libre du porte-instrument (5).

3. Appareil électrique (1) selon la revendication 1,
**caractérisé en ce que**
la région d'accouplement (B) prévue sur le porte-instrument (5) est disposée devant la masse excentrique (23) en direction axiale.

4. Appareil électrique (1) selon la revendication 3,
**caractérisé en ce que**
l'espace (63) formant la partie d'accouplement (B) est séparé par une paroi intermédiaire (42) de l'espace inférieur (69) recevant la masse excentrique (23).

5. Appareil électrique (1) selon la revendication 1,
**caractérisé en ce que**
le porte-instrument (5) et les instruments (32, 37) sont réalisés en matière plastique.

6. Appareil électrique (1) selon la revendication 1,
**caractérisé en ce que**
la surface extérieure (53) réalisée sous la forme d'un tronc de cône s'élargissant coniquement en direction de l'appareil (1) sert à recevoir un manchon d'accouplement correspondant (38), qui entoure le porte-instrument (5) et fait lui-même partie de l'instrument (37).

7. Appareil électrique (1) selon la revendication 3,
**caractérisé en ce que**
le porte-instrument (5) présente, de préférence sur son côté frontal plat, la partie d'accouplement (B) sous la forme d'un profil multipans creux, de préférence d'un profil carré creux (26), dans lequel un instrument (31) peut être fixement inséré par sa région d'accouplement (34).

8. Appareil électrique (1) selon les revendications 1 und 3,
**caractérisé en ce que**
tant la partie d'accouplement (A) que la partie d'accouplement (B) sont formées sur le porte-instrument (5).
